# EUROPEAN PATENT SPECIFICATION

(11) **EP 3 278 655 B1**
(45) Date of publication and mention of the grant of the patent: **23.12.2020**
(21) Application number: 17185086.0
(22) Date of filing: 07.08.2017
(51) Int. Cl.: A01D 46/26

(54) **PORTABLE BEATING DEVICE FOR PICKING FRUIT OFF TREES, IN PARTICULAR FOR PICKING OLIVES**
TRAGBARE SCHLAGVORRICHTUNG ZUM PFLÜCKEN VON FRÜCHTEN VON BÄUMEN, INSBESONDERE ZUM PFLÜCKEN VON OLIVEN
DISPOSITIF DE BATTAGE PORTATIF PERMETTANT DE CUEILLIR DES FRUITS SUR LES ARBRES, EN PARTICULIER POUR LA CUEILLETTE D'OLIVES

(30) Priority: 05.08.2016 IT 201600083141
(43) Date of publication of application: 07.02.2018
(73) Proprietor: DAVIDE E LUIGI VOLPI S.p.A., 46040 Casalromano (IT); Active S.r.l., 26037 San Giovanni in Croce (Cremona) (IT)
(72) Inventor: CAPORALI, Gabriele, 46040 CASALROMANO (IT); GRIFFINI, Alberto, 26037 SAN GIOVANNI IN CROCE (IT)
(74) Representative: Cernuzzi, Daniele

(56) References cited:
- EP-A1- 1 273 222
- EP-A1- 1 943 895
- EP-A1- 2 699 076
- EP-A1- 2 862 434
- EP-A2- 2 138 028
- DE-C1- 19 833 790

## Description

The present invention relates to a portable beating device for picking fruit off trees, in particular for picking olives.

It is known a wide variety of portable beating devices for picking in particular olives, which generally include rotating vibrating members mounted on an operator-handled support structure; the beating members, driven by a motorized drive unit (which can be of various types, e.g. electric, thermal, pneumatic, etc.), beat the branches of the trees so as to cause the detachment and the fall of the fruit (olives).

In particular, known devices have two oscillatory arms provided with beating sticks and actuated in a reciprocating motion by a transmission system connected to a motorized drive unit. The arms move in an alternating rotational motion about respective rotating pins.

EP2138028A2 shows an example of this type of device, wherein the oscillatory arms are actuated by a rod-crank mechanism acting on respective arm ends; the arms are individually hinged to respective rod elements actuated by a common crank element.

EP2862434A1, in turn, discloses a device in which the arms, besides having an oscillatory rotational movement, perform a translation movement along their respective longitudinal axes, which improves the performance of the device.

EP1943895A1 and EP1273222A1 disclose devices of the type that comprises two opposite oscillating arms articulated to a supporting body and connected to an actuator (a rod-crank mechanism in EP1943895A1; a pneumatic-cylinder actuation in EP1273222A1); the arms are also hinged to respective lateral ends of a head of an actuating element by respective composite joints.

The known devices shortly described hereinafter, like other analogue devices, however, have space for improvement, in particular with regard to simplicity and cost and use effectiveness as well as with regard to efficiency, versatility and practicality of use.

It is therefore an object of the present invention to provide a portable beating device for picking fruit off trees which, besides being simple and inexpensive to manufacture and use, is also quite effective, practical and versatile.

The present invention therefore relates to a portable beating device for picking fruit off trees, in particular for picking olives, as essentially defined in claim 1 and, with regard to its preferred aspects, in the dependent claims.

The device according to the invention is extremely simple and inexpensive to manufacture and use, compact, robust and reliable.

Moreover, if compared to known solutions that perform similar movements, the device of the invention has a simpler, more reliable and cheaper movement system of the beating members.

In particular, the device of the invention is structurally simpler and requires fewer components, thus being simpler and cheaper to assemble. Furthermore, the invention reduces the risk of breakdowns in use, as it reduces the number of components subject to critical operating conditions (constrained components, subjected to misaligned or crooked stresses): the only critical component of the device of the invention (the arm-moving rod, which is connected to them by means of the eccentric pins) can be suitably sized to withstand stresses.

Moreover, the movement system provided by the device of the invention allows the sealing of moving mechanical parts in a simpler and more effective way, thus protecting them from external contaminants and allowing an effective lubrication.

In an embodiment, furthermore, the arms of the device, besides having an oscillatory rotational movement, have a translational movement component along the respective longitudinal axes, which significantly improves the performance of the device allowing a more efficient and reliable operation.

Further features and advantages of the present invention will become apparent from the following description of a non-limiting embodiment thereof with reference to the figures of the accompanying drawings, in which:
- Figure 1 is a partial perspective view, with parts removed for clarity's sake, of a portable beating device for picking fruit off trees, in particular for picking olives, made according to a first embodiment of the invention;
- Figures 2-4 are respectively a front view, a rear view and a side view, with parts removed for clarity's sake, of the device of Figure 1;
- Figure 5 is an enlarged scale view of a detail of the device of Figure 1;
- Figure 6 is an enlarged scale view of a detail of the device of Figure 1 according to a variant;
- Figure 7 is a partial perspective view, with parts removed for clarity's sake, of a portable beating device for picking fruit off trees, in particular for picking olives, made according to a second embodiment of the invention;
- Figures 8-9 are respectively a front view and a rear view, with parts removed for clarity's sake, of the device of Figure 7;
- Figure 10 is a side view, with parts removed for clarity's sake, of a detail of the device of Figure 7.

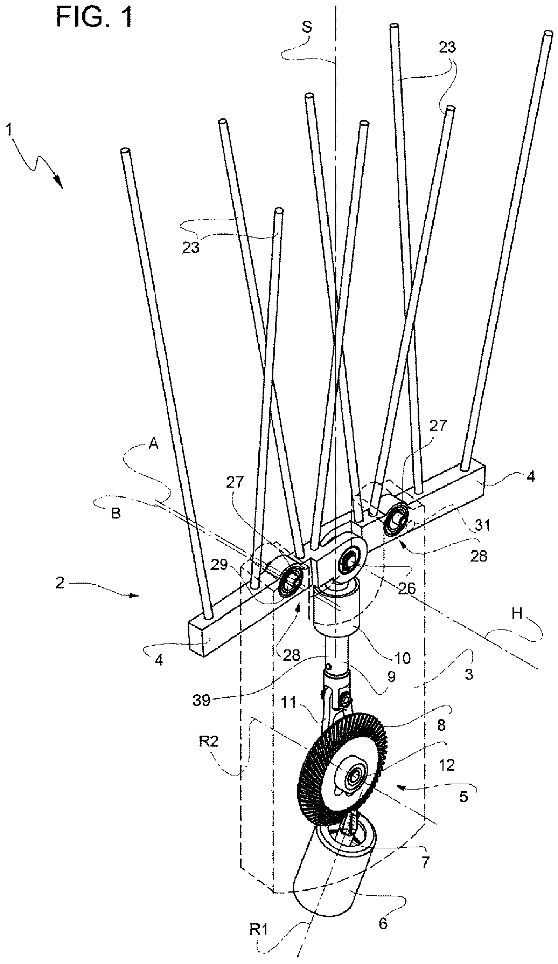

Figure 1 generally indicates with 1 a portable beating device for picking fruit off trees, in particular for picking olives, showing only the parts which are pertinent to the understanding of the present invention and in particular an operating head 2 of the device 1.

The head 2 comprises: a support frame 3 (only partially and schematically shown by dotted lines in Figure 1); a pair of oscillatory beating members 4 supported by the frame 3 and projecting from the frame 3; and a movement system 5 supported by the frame 2 and moving the beating members 4. The movement system 5 is driven by a motorized drive unit, not shown for simplicity's sake, which can be of various types (e.g. electric, thermal, compressed air, etc.).

The head 2 is mounted for example at the end of an operation rod 6 (only partially shown in Figure 1). The motorized drive unit can be arranged at the base of the rod 6 or can be arranged on the head 2.

In any case, the motorized drive unit is connected to the movement system 5 for transmitting a driving torque to the movement system 5.

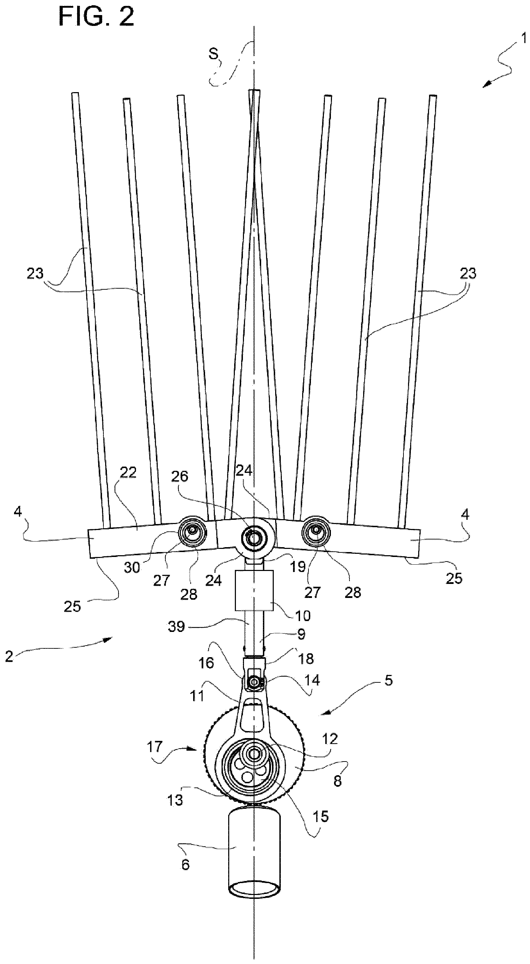

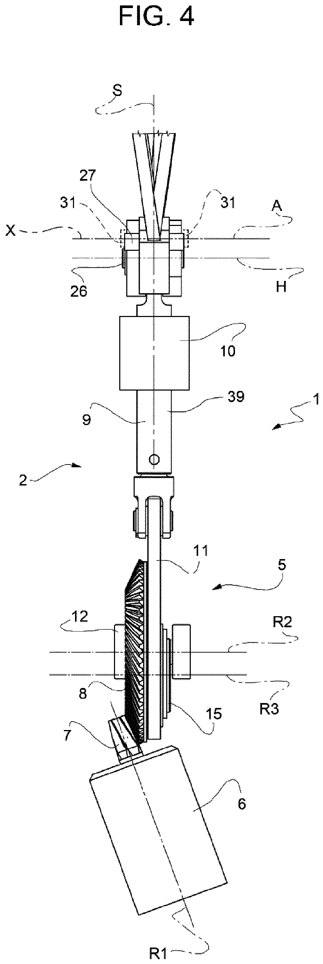

Referring also to Figures 2-4, the movement system 5 comprises: a pinion 7; a toothed wheel 8 engaged by the pinion 7; a stem 9 sliding in a guide 10; and a rod 11 connecting the toothed wheel 8 and the stem 9.

The torque generated by the motorized drive unit reaches the movement system 5 through the pinion 7, which rotates about a rotation axis R1.

The pinion 7 engages the toothed wheel 8, rotating about a rotation axis R2 and preferably having a diameter and a number of teeth higher than the pinion 7 so as to define also a reduction gear unit of the rotation speed.

Advantageously, the pinion 7 and the toothed wheel 8 are both conical gears and their respective rotation axes R1, R2 are inclined relative to one another at an angle other than 90°. This allows the head 2 and, in particular, the beating members 4 to be inclined with respect to the rod 6, thus facilitating the use of the device 1. However, it is clear that the pinion 7 and the toothed wheel 8, and hence the respective rotation axes R1, R2, may be differently oriented, being in particular even perpendicular to each other.

The toothed wheel 8 is supported by the frame 3 and hinged to the frame 3 by means of at least one central pin 12 arranged along the rotation axis R2.

The rod 11 extends between two opposite longitudinal ends 13, 14, which are hinged to the toothed wheel 8 and, respectively, to the stem 9 by respective pins 15, 16 parallel to the rotation axis R2 of the toothed wheel 8.

The rod 11 is eccentrically mounted on the toothed wheel 8, i.e. the rod 11 is hinged to the toothed wheel 8 in a decentralized position with respect to the rotation axis R2. The pin 15 is in fact eccentrically arranged (with respect to the central pin 12, and hence to the rotation axis R2) on the toothed wheel 8, thus acting as a crank element for the rod 11 and forming a rod-crank mechanism 17 together with the rod 11.

The rod 11 rotates with respect to the toothed wheel 8 about a rotation axis R3 defined by the pin 15 and which is parallel to the rotation axis R2 of the toothed wheel 8 and radially spaced therefrom. In particular, the longitudinal end 13 of the rod 11 is hinged to the toothed wheel 8 by means of the pin 15, which is parallel to the central pin of the toothed wheel 8 and radially spaced from the central pin of the toothed wheel 8.

The longitudinal end 14 opposite to the rod 11 is hinged through the pin 16 to the stem 9.

The stem 9 is inserted into the guide 10, which is integral with the frame 3; the stem 9 slides in the guide 10 along a sliding axis S and extends along the sliding axis S, axially projecting from the guide 10 with respective opposite axial ends 18, 19 hinged to the rod 11 and, respectively, to the beating members 4.

The rod-crank mechanism 17 formed by the rod 11 and by the toothed wheel 8 (crank element) moves in an alternating translational motion the stem 9 along the sliding axis S.

The beating members 4 are supported by the frame 3 and are actuated by the movement system 5 through the stem 9, which defines a pushing element 39 acting on the beating members 4.

In particular, the beating members 4 laterally project on opposite sides of the sliding axis S of the stem 9.

Each beating member 4 comprises an arm 22, for example (but not necessarily) substantially rectilinear, and a plurality of transverse prongs 23 projecting from the arm 22 and longitudinally spaced along each arm 22, which project transversely to the arm 22. The prongs 23 are, preferably, differently inclined relative to one another and to the respective arm 22. In the shown example, the prongs 23 are shaped like rectangular sticks.

The arms 22 longitudinally extend between respective driving ends 24, hinged to the stem 9, and respective free ends 25 opposite to the driving ends 24.

The beating members 4, and precisely the arms 22, are hinged to each other and to the stem 9 by means of at least a central operation pin 26, engaging respective driving ends 24 of the arms 22 and defining a common hinge axis H of the beating members 4. The operation pin 26 is integral with the stem 9, thus sliding backward and forward along the sliding axis S together with the stem 9.

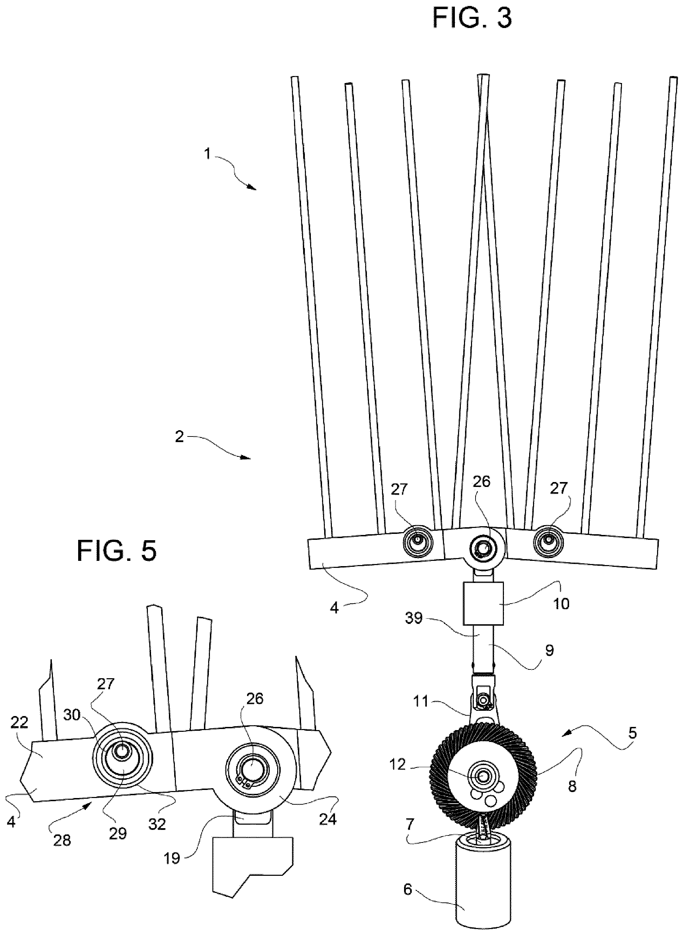

Referring also to Figure 5, the beating members 4 and precisely the arms 22 are then hinged to the frame 3 by means of respective eccentric pins 27, defining respective rototranslating joints 28.

As already known, an eccentric pin is a pin projecting from a circular base body along a disarranged (decentralized) axis with respect to a central axis (rotation axis) of the base body.

In this case, each joint 28 includes an eccentric pin 27 and a cylindrical bush 29 defining a support 30 of the pin 27; the pin 27 and the bush 29 are joined to each other and extend along respective central axes A, B, parallel to each other and radially spaced from each other.

The pin 27 extends parallel to the axis B of the bush 29 in an eccentric (decentralized) position with respect to the axis B, along the axis A that is parallel to the axis B. The pin 27 axially projects from at least one face of the bush 29 (or from respective opposite faces of the bush 29) and engages a corresponding rotation seat 31 in the frame 3. The pin 27 rotates within the rotation seat 31 about the axis A (parallel to the hinge axis H).

The bush 29 is rotatably inserted (optionally interposing a bearing) in a correspondingly cylindrical rotation seat 32, formed in a beating member 4 on an arm 22. The bush 29 rotates in the rotation seat 32 about the axis B (parallel to the hinge axis H).

The pin 27 can be integrally fastened to the bush 29 (thus forming one piece with the bush 29), or it can be rotatable with respect to the bush 29.

Each beating member 4 rotates with respect to the frame 3 through its respective joint 28 about two parallel rotating axes A, B, respectively defined by the central axles of the pin 27 and of the bush 29. The axes A, B are also parallel to the rotation axis R2, R3 and perpendicular to the sliding axis S of the stem 9.

The joints 28 are therefore configured to allow the rotation (oscillation) of the respective beating members 4, and precisely of the arms 22, with respect to the frame 3 about two parallel rotation axes A, B, thus resulting in a translational motion component along each arm 22. Consequently, the joints 28 are rototranslating joints, which connect each beating member 4 to the frame 3 so that the beating member 4 rotates with respect to the frame 3 about the axis A, thus defining an oscillatory axis X of the beating member 4, and so that it can also move relative to the frame 3, radially with respect to the axis A.

The support 30 of the pin 27 is therefore configured to move the pin 27 radially with respect to the axis A while the pin 27 rotates about the oscillation axis A.

The joints 28 are arranged in an intermediate position between the driving ends 24 and the free ends 25 of the arms 22.

In use, the rotational movement generated by the motorized drive unit of the device 1 is transformed into an alternating translational motion by the movement system 5 acting on the stem 9 and in particular by the rod-crank mechanism 17.

In particular, the pinion 7 (connected to the motorized drive unit of the device 1) rotates the toothed wheel 8 about the rotation axis R2, thus moving the rod 11 as well; the rod 11 moves the stem 9 along the sliding axis S in the guide 10.

The stem 9 moves in an alternating translational motion along the sliding axis S, forward and backward with respect to the guide 10 and then to the frame 3, and drives with it the operation pin 26 hinged to the driving ends 24 of the arms 22 of the beating members 4; the driving ends 24 of the arms 22 and the operation pin 26 move parallel to the sliding axis S as well.

In this way, when the stem 9 slides along the sliding axis S, thus driving the operation pin 26, the driving ends 24 of the arms 22 translate along the sliding axis S and at the same time rotate about the hinge axis H with respect to the stem 9.

The arms 22, being also connected through the joints 28 to the frame 3, rotate about the eccentric pins 27 and then about the respective axes A; at the same time, the bushes 29 rotate in respective rotation seats 32, thus allowing the arms 22 to move longitudinally with respect to the frame 3.

Ultimately, the alternating translational motion of the stem 9 results in an oscillatory movement of the beating members 4 and precisely of the arms 22 (with a translational component which allows the rotation of the arms 22 on the joints 28 and at the same time the movement of the driving ends 24 along the sliding axis S).

In this way, the beating members 4 can be moved in an oscillatory movement by acting on a single element, namely on the stem 9, which drives both beating members 4. The beating members 4 have a rototranslating movement with a translational component, which besides allowing the movement of beating members 4 in a simple and effective way, also improves the beating effect on the fruit-carrying branches and/or on the fruit to be picked with respect to a purely rotational/oscillatory movement.

This results in a particularly simple, effective and reliable operation.

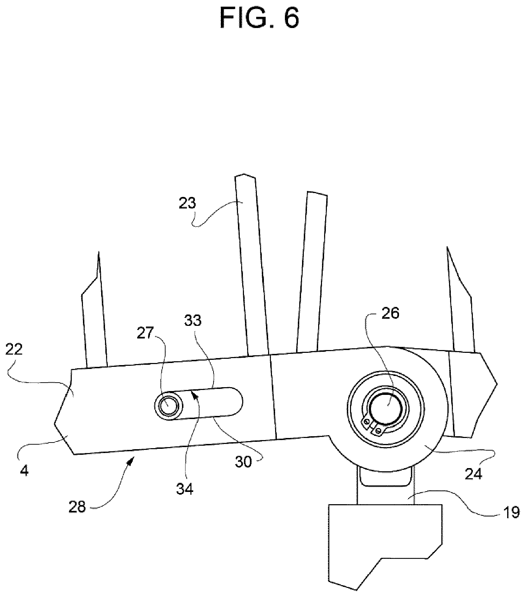

Also in the variant schematically shown in Figure 6, in which details similar or identical to those already described are indicated by the same numbers, the beating members 4 are always hinged to each other and to an axial end of the stem 9 by means of at least one operation pin 26 defining a common hinge axis H of the beating members 4; and the beating members 4 are hinged to the frame 3 by means of respective rototranslating joints 28 connecting each beating member 4 to the frame 3 so that the beating member 4 rotates with respect to the frame 3 about an oscillation axis A parallel to the hinge axis H and can also move relative to the frame 3 radially with respect to the oscillation axis A.

Also in this case, each joint 28 includes a pin 27 defining the oscillation axis A and a support 30 of the pin 27 configured to move the pin 27 radially with respect to the axis A while the pin 27 rotates about the axis A.

In this case, the pin 27 axially projects along the axis A and engages a slotted sliding seat 33 defining the support 30 and shaped like a slot, radially extending with respect to the axis A.

Obviously, the pin 27 may be integral with the frame 3 and the sliding seat 33 can be formed on the beating member 4, or vice versa.

In this way, the pin 27 allows the rotation of the beating member 4 with respect to the frame 3 about the axis A and at the same time, sliding in the sliding seat 33, allows the translation necessary to move the driving end 24 along the sliding axis S.

The pin 27 slides in contact with an inner side surface 34 of the sliding seat 33, whereby the pin 27 and the lateral surface 34 are suitably manufactured/processed to withstand the stresses resulting from their movement.

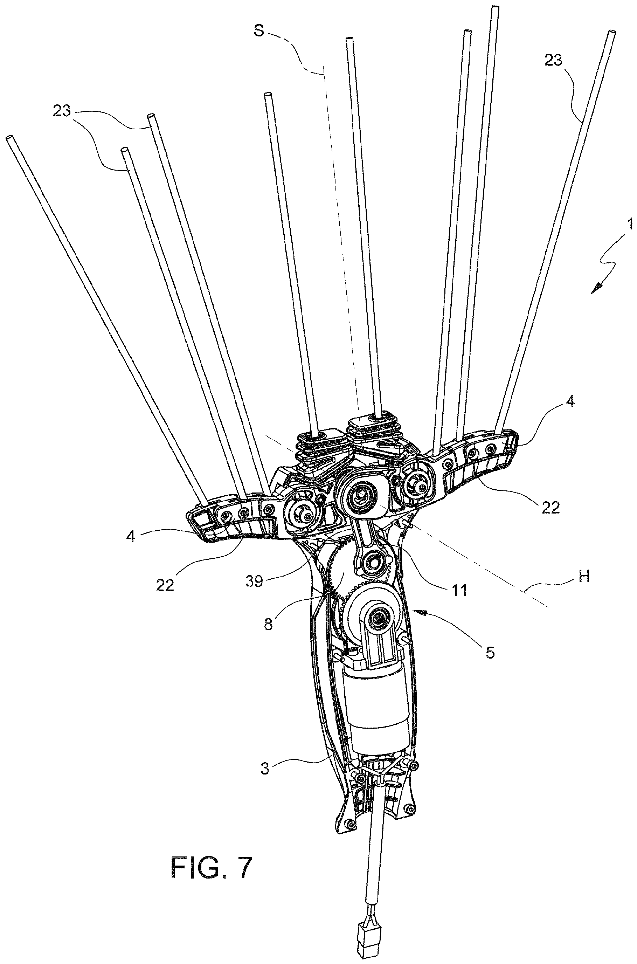

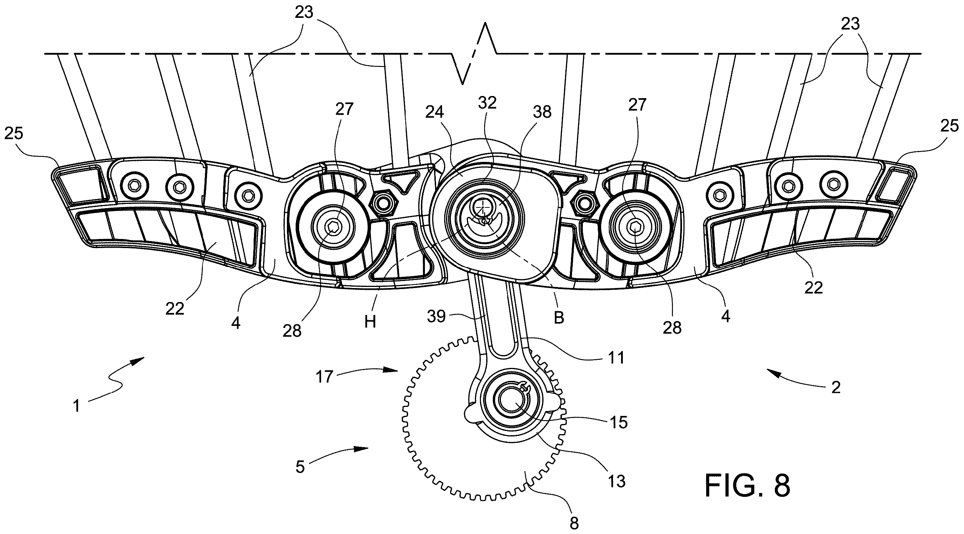

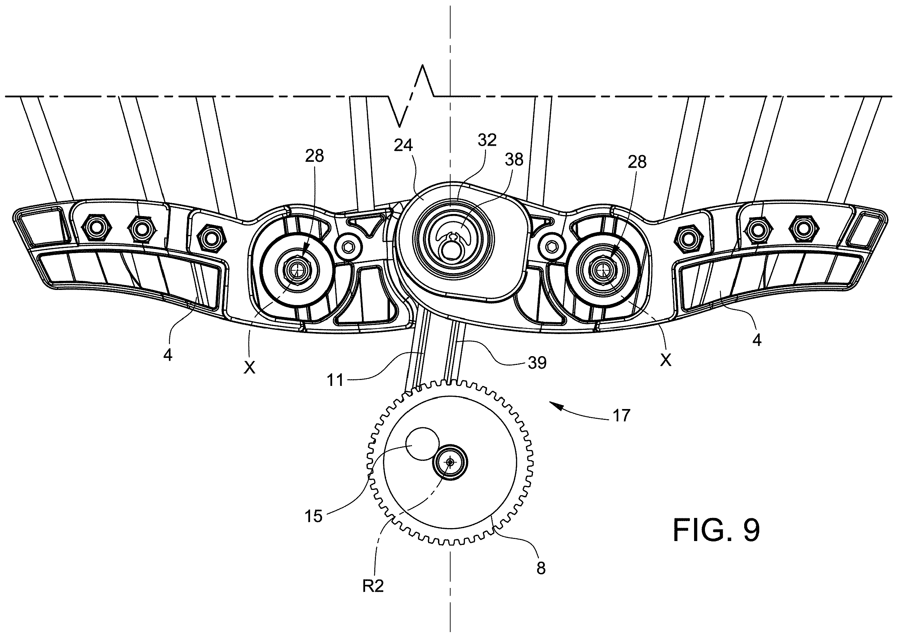

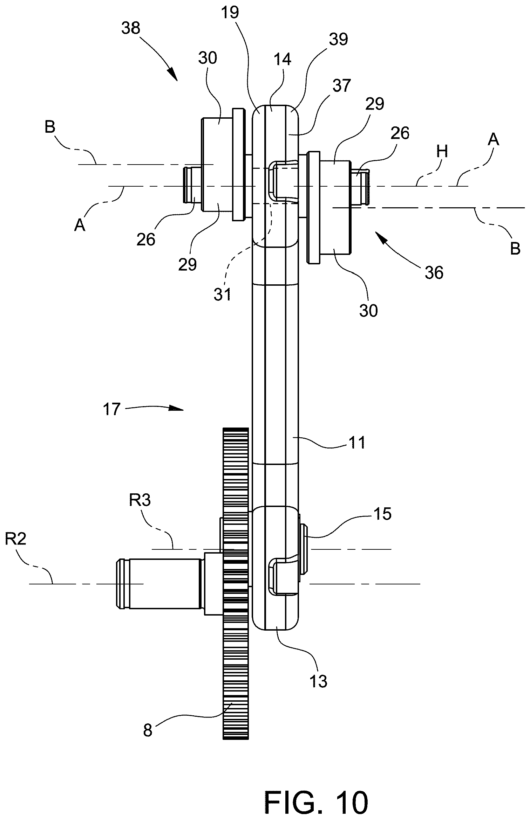

Figures 7-10, in which details similar or identical to those described above are indicated by the same numbers, show the device 1 according to another embodiment of the invention.

Also in this embodiment, the device 1 has a head 2 comprising: a support frame 3 (only partially shown in Figure 7); a pair of oscillatory beating members 4 supported by frame 3; and a movement system 5 supported by the frame 2 and which moves the beating members 4.

Also in this case, the movement system 5 is driven by a motorized drive unit which transmits a driving torque, e.g. by means of a pinion (not visible/not shown) engaging a toothed wheel 8 rotatable about a rotation axis R2.

A rod 11 extends between two opposite longitudinal ends 13, 14 which are hinged to the toothed wheel 8 and, respectively, to the beating members 4.

The rod 11 is eccentrically mounted on the toothed wheel 8, i.e. the rod 11 is hinged to the toothed wheel 8 in a decentralized position with respect to the rotation axis R2 of the toothed wheel 8 by means of an eccentric pin 8 on the toothed wheel 8, which therefore acts as a crank element for the rod 11, thus forming a rod-crank mechanism 17 together with the rod 11.

As in the embodiment described above, the rod 11 rotates with respect to the toothed wheel 8 about a rotation axis R3 defined by the pin 15 and parallel to the rotation axis R2 of the toothed wheel 8 and radially spaced from it.

The opposite longitudinal end 14 of the rod 11 is provided with an end head 37, which is hinged to the beating members 4 by respective joints 38.

The rod-crank mechanism 17 formed by the rod 11 and by the toothed wheel 8 (crank element) moves the head 37 of the rod 11 forward and backward, substantially along a sliding axis S.

The beating members 4 are supported by the frame 3 and are actuated by the movement system 5 by means of the rod 11, which defines a pushing element 39 acting on the beating members 4 (in the embodiment of Figures 1-6, this function is carried out by the stem 9).

In particular, the beating members 4 laterally project from opposite sides of the sliding axis S.

Each beating member 4 comprises an arm 22 and a plurality of transverse prongs 23, which project from the arm 22 and are longitudinally spaced along each arm 22 and project transversely to the arm 22. The prongs 23 are preferably differently inclined relative to one another and to the respective arm 22. In the shown example, the prongs 23 are shaped like straight sticks.

The arms 22 longitudinally extend between respective driving ends 24, hinged to the head 37 of the rod 11, and respective free ends 25, opposite to the driving ends 24.

The beating members 4, and precisely the arms 22, are hinged to the frame 3 by means of respective joints 28 arranged in an intermediate position between the driving ends 24 and the free ends 25 of the arms 22.

In this embodiment, the joints 28 allow only the rotation/oscillation of the respective beating members 4 about respective oscillation axes fixed with respect to the frame 3 and perpendicular to the beating members 4. Specifically, each joint 28 comprises a pin 27 coupled (optionally interposing a bearing) to the frame 3 and to a beating member 4.

Each beating member 4 is thus rotatable (oscillatory) with respect to the frame 3 through the respective joint 28 about the axis A. The joints 28, on the other hand, couple the respective beating members 4 to the frame 3 in a transverse (radial) direction (thus preventing any transverse movement of the beating members 4 with respect to the frame 3).

At least one of the joints 38 connecting the beating members 4 and precisely the arms 22 with the head 37 is a composite joint, which allows the rotation of the respective beating member 4 about an axis A and even a transverse displacement of the axis A about which the beating member 4 rotates.

Preferably, as shown, both joints 38 are composite joints.

In particular, each joint 38 comprises an operation pin 26 which allows the rotation of the respective beating member 4 about an axis of the pin 26 (defining the rotation axis A of the beating member 4), and a support 30 of the pin 26 configured to allow a transverse displacement of the pin 26 in a substantially radial direction with respect to the axis A, while the beating member 4 rotates about the axis A.

In the embodiment shown in Figures 7-10, the pins 26 are eccentric pins, as previously defined.

Each joint 28 includes in particular an eccentric pin 26 and a cylindrical bush 29 defining a support 30 of the pin 26; the pin 26 and the bush 29 are joined to each other and extend along respective central axes A, B parallel to each other and radially spaced from each other.

The pin 26 extends parallel to the axis B of the bush 29 in an eccentric (decentralized) position with respect to the axis B along the axis A, which is parallel to the axis B.

The pin 26 axially projects from at least one face of the bush 29 (or from respective opposite faces of the bush 29) and engages, by optionally interposing a bearing, a rotation seat 31 on the end head of the rod 37.

The pin 26 rotates within the rotation seat 31 about the axis A.

The bush 29 is rotatably inserted (optionally interposing a bearing) in a correspondingly cylindrical rotation seat 32, formed in a beating member 4 on an arm 22 at the driving end 24 of the respective beating member 4.

The bush 29 rotates in the rotation seat 32 about the axis B.

The pin 26 can be integrally fastened to the bush 29 (thus forming one piece with the bush 29), or it can be rotatable with respect to the bush 29.

In the example shown, but not necessarily, the pins 26 are mutually aligned, their respective axis A coinciding and defining a common hinge axis H of the beating members 4. Advantageously, the pins 26 are united into one piece to form a single operation pin 26 common to the two joints 28 and passing through the head 37.

The axes B of the bushings 29 are, however, advantageously parallel but offset (not aligned) one with respect to the other.

Each beating member 4 is hinged to the frame 3 by means of the respective joint 28, which allows only the rotation/oscillation of the beating member 4 about the axis A; and to the head 37 of the rod 11, namely of the pushing element 39, by means of the respective joint 38, which allows the rotation of the beating member 4 and precisely of its arm 22 with respect to the head 37 about two parallel rotation axes A, B, respectively defined by the central axes of the pin 26 and the bush 29.

In this way, the beating members 4, coupled to the frame 3 by respective joints 28, can rotate/oscillate about their respective (fixed) oscillation axes X and can also be hinged to the head 37, which substantially moves backward and forward along the sliding axis S and drives the driving ends 24 of the beating members 4.

In use, the rotational movement generated by the motorized drive unit of the device 1 is transformed into an alternating translational motion by the movement system 5 and in particular by the rod-crank mechanism 17 acting on the pushing element 39 defined by the rod 11.

The head 37 of the rod 11 moves in an alternating translational movement substantially along the sliding axis S, backward and forward relative to the frame 3, and drives the pins 26 (optionally joined to form a single pin) hinged to the driving ends 24 of the arms 22 of the beating members 4.

Thus, when the head 37 slides along the sliding axis S by driving the pins 26, the driving ends 24 of the arms 22 are driven by the head 37, which causes the rotation/oscillation of the beating members 4 about respective oscillation axes X.

Ultimately, the alternating translational movement of the pushing element 39, namely of the head 37 of the rod 11, imparts the oscillatory movement of the beating members 4 and precisely of the arms 22.

Clearly, also in this embodiment, other types of composite joints may be used instead of joints 38 with eccentric pins, as described and shown above.

For example, the joints 38 may be similar to those shown in Figure 6, wherein the pin 26 engages a slotted and suitably shaped sliding seat 33 defining the support 30.

It is also clear that the device described and shown herein may have further modifications and variations, which do not depart from the scope of the appended claims.

## Claims

1. A portable beating device (1) for picking fruit off trees, in particular for picking olives, comprising: a support frame (3); a pair of oscillatory beating members (4) supported by the frame (3) and hinged to the frame (3) by means of respective first joints (28); and a movement system (5) supported by the frame (3) and moving the beating members (4) by means of a pushing element (39) having a first axial end (19) movable along a sliding axis (S) and coupled to respective driving ends (24) of the beating members by means of respective second joints (38); the device (1) being **characterized in that** the beating members (4) are hinged to each other and to an axial end of the pushing element (39) by means of at least one operation pin (26) defining a common hinge axis (H) of the beating members (4); and **in that** at least one between the first joint (28) and the second joint (38) of at least one of said beating members (4) is a composite joint, configured to allow the rotation of the respective beating member (4) about at least a first rotation axis (A, B) and a transverse displacement of said first rotation axis (A, B) while the beating member (4) rotates about said first rotation axis (A, B).

2. A device according to claim 1, wherein said composite joint (38) is configured to allow the rotation of the respective beating member (4) about a first and a second rotation axis (A, B), which are parallel and radially spaced from each other.

3. A device according to claim 1 or 2, wherein the composite joint (38) comprises a pin (27; 26), which allows the rotation of the respective beating member (4) about an axis (A) of the pin (27; 26); and a support (30) of the pin (27; 26) configured to allow a transverse displacement of the pin (27; 26) while the beating member (4) rotates about the axis (A) of the pin (27; 26).

4. A device according to any one of the preceding claims, wherein said first joints (28), which connect the respective beating members (4) to the frame (3), are arranged in an intermediate position between respective driving ends (24) and respective free ends (25) of the beating members (4) and allow only the rotation/oscillation of the respective beating members (4) about respective oscillation axes (X) fixed with respect to the frame (3); and said second joints (38), which connect the respective beating members (4) to the pushing element (9; 11), are composite joints that allow the rotation of the respective beating members (4) about respective rotation axes (A) and the transverse displacement of the respective rotation axes (A) .

5. A device according to any one of the preceding claims, wherein the second joints (38) comprise respective eccentric pins (26) which are eccentric with respect to respective supports (30) of the pins (26) defined by respective cylindrical bushes (29); each pin (26) and the respective bush (29) being joined to each other and extending along respective central axes (A, B) parallel to each other and radially spaced from each other.

6. A device according to any one of the preceding claims, wherein the pushing element (39) acting on the beating members (4) is defined by a rod (11) of a rod-crank mechanism (17).

7. A device according to claim 1, wherein the pushing element (39) is defined by a stem (9) sliding along the sliding axis (S) in a guide (10) integrally fastened to the frame (3); and the beating members (4) are hinged to each other and to said first axial end (18) of the stem (9) by at least one operation pin (26) defining a common hinge axis (H) of the beating members (4); and the beating members (4) are hinged to the frame (3) by means of respective first rototranslating joints (28) connecting each beating member (4) to the frame (3) so that each beating member (4) can rotate with respect to the frame (3) about an oscillation axis (A) parallel to the hinge axis (H) and can also translate with respect to the frame (3), radially with respect to the oscillation axis (A).

8. A device according to claim 1, wherein each first joint (28) includes a pin (27) defining the oscillation axis (A); and a support (30) of the pin (27) configured to move the pin (27) radially with respect to the oscillation axis (A) while the pin (27) rotates about the oscillation axis (A).

9. A device according to claim 8, wherein the beating members (4) are hinged to the frame (3) by respective eccentric pins (27) defining respective first joints (28); and wherein each first joint (28) comprises an eccentric pin (27) and a cylindrical bush (29) defining the support (30) of the pin (27); the pin (27) and the bush (29) being joined to each other and extending along respective central axes (A, B) parallel to one another and radially spaced apart from one another; the pin (27) and the bush (29) being rotatable inside respective rotation seats (31, 32) formed on the frame (3) and on a beating member (4), respectively.

10. A device according to claim 9, wherein each beating member (4) rotates with respect to the frame (3) by means of the respective joint (28) about two rotation axes parallel to one another, defined by the central axes (A, B) of the pin (27) and of the bush (29), respectively.

11. A device according to claim 9 or 10, wherein the central axes (A, B) of the pin (27) and of the bush (29) are perpendicular to the sliding axis (S) of the stem (9).

12. A device according to claim 8, wherein the pin (27) axially projects along the oscillation axis (A) and engages a slotted sliding seat (33), defining the support (30) and shaped like an elongated slot extending radially with respect to the oscillation axis (A).

13. A device according to any one of the claims 7 to 12, wherein the movement system (5) comprises a rod-crank mechanism (17) for moving the stem (9) along the sliding axis (S) in an alternating translational motion.

14. A device according to claim 13, wherein the rod-crank mechanism (17) comprises a toothed gear (8), acting as a crank element, and a rod (11), eccentrically mounted on the toothed gear (8).

15. A device according to claim 14, wherein the rod (11) extends between opposite longitudinal ends (13, 14,) which are hinged to the toothed gear (8) and to the stem (9), respectively.

16. A device according to any one of the preceding claims, wherein the beating members (4) have respective driving ends (24), hinged to the stem (9), and respective free ends (25), opposite to the driving ends (24); and each first joint (28) is arranged on a beating member (4) in an intermediate position between the driving end (24) and the free end (25).

17. A device according to any one of the preceding claims, wherein each beating member (4) comprises an arm (22) and a plurality of transverse prongs (23), which project from the arm (22) and are longitudinally spaced along the arm (22).

## Patentansprüche

1. Tragbare Schlagvorrichtung (1) zum Pflücken von Früchten von Bäumen, insbesondere zum Pflücken von Oliven, umfassend: einen Tragrahmen (3); ein Paar oszillierender Schlagelemente (4), die von dem Rahmen (3) getragen werden und an dem Rahmen (3) mittels jeweiliger erster Verbindungen (28) angelenkt sind; und ein Bewegungssystem (5), das von dem Rahmen (3) getragen wird und die Schlagelemente (4) mittels eines Schubelements (39) bewegt, das ein erstes axiales Ende (19) aufweist, das entlang einer Gleitachse (S) bewegbar ist und mit jeweiligen Antriebsenden (24) der Schlagelemente mittels jeweiliger zweiter Verbindungen (38) gekoppelt ist; wobei die Vorrichtung (1) **dadurch gekennzeichnet ist, dass** die Schlagelemente (4) aneinander und an ein axiales Ende des Schubelements (39) mittels mindestens eines Betätigungsstifts (26) angelenkt sind, wobei der Betätigungsstifts (26) eine gemeinsame Gelenkachse (H) der Schlagelemente (4) definiert,; und dass mindestens eine Verbindung von der der ersten Verbindung (28) und der zweiten Verbindung (38) eines der Schlagelemente (4) eine zusammengesetzte Verbindung ist, die dafür ausgelegt ist, dass die Drehung des jeweiligen Schlagelements (4) um mindestens eine erste Drehachse (A, B) und eine Querverlagerung der ersten Drehachse (A, B) möglich ist, während das Schlagelement (4) um die erste Drehachse (A, B) dreht.

2. Vorrichtung nach Anspruch 1, wobei die zusammengesetzte Verbindung (38) dafür ausgelegt ist, dass die Drehung des jeweiligen Schlagelements (4) um eine erste und um eine zweite Drehachse (A, B), die zueinander parallel und radial voneinander beabstandet sind, möglich ist.

3. Vorrichtung nach Anspruch 1 oder 2, wobei die zusammengesetzte Verbindung (38) einen Stift (27; 26) umfasst, der die Drehung des jeweiligen Schlagelements (4) um eine Achse (A) des Stifts (27; 26) ermöglicht; und einen Träger (30) des Stifts (27, 26), der dafür ausgelegt ist eine Querverlagerung des Stiftes (27; 26) zu ermöglichen, während sich das Schlagelement (4) um die Achse (A) des Stifts (27; 26) dreht.

4. Vorrichtung nach einem der vorstehenden Ansprüche, wobei die ersten Verbindungen (28), die die jeweiligen Schlagelemente (4) mit dem Rahmen (3) verbinden, in einer Zwischenposition zwischen jeweiligen Antriebsenden (24) und jeweiligen freien Enden (25) der Schlagelemente (4) angeordnet sind und nur die Drehung/Oszillation der jeweiligen Schlagelemente (4) um jeweilige Oszillationsachsen (X) ermöglichen, wobei die Oszillationsachsen (X) in Bezug auf den Rahmen (3) stationär sind,; und die zweiten Verbindungen (38), die die jeweiligen Schlagelemente (4) mit den Schubelementen (9; 11) verbinden, zusammengesetzte Verbindungen sind, die die Drehung der jeweiligen Schlagelemente (4) um jeweilige Drehachsen (A) und die Querverlagerung der jeweiligen Drehachsen (A) ermöglichen.

5. Vorrichtung nach einem der vorstehenden Ansprüche, wobei die zweiten Verbindungen (38) jeweilige exzentrische Stifte (26) umfassen, die in Bezug auf die jeweiligen Träger (30) der Stifte (26), die von jeweiligen zylindrischen Hülsen (29) definiert sind, exzentrisch sind; wobei jeder Stift (26) und die jeweilige Hülse (29) miteinander verbunden sind und sich entlang jeweiliger Mittenachsen (A, B) parallel zueinander und radial voneinander beabstandet erstrecken.

6. Vorrichtung nach einem der vorstehenden Ansprüche, wobei das Schubelement (39), das auf die Schlagelemente (4) einwirkt, von einer Stange (11) eines Schubkurbel-Mechanismus (17) definiert wird.

7. Vorrichtung nach Anspruch 1, wobei das Schubelement (39) von einem Schaft (9) definiert wird, der entlang der Gleitachse (S) in einer Führung (10), die integral an dem Rahmen (3) befestigt ist, gleitet; und die Schlagelemente (4) aneinander und an dem ersten axialen Ende (18) des Schafts (9) durch mindestens einen Betriebsstift (26), der eine gemeinsame Scharnierachse (H) der Schlagelemente (4) bildet, angelenkt sind; und die Schlagelemente (4) an dem Rahmen (3) mittels jeweiliger erster in Drehung verschiebbarer Verbindungen (28) angelenkt sind, die jedes Schlagelement (4) an dem Rahmen (3) derart verbinden, dass jedes Schlagelement (4) in Bezug auf den Rahmen (3) um eine Oszillationsachse (A) parallel zu der Scharnierachse (H) drehen und sich auch in Bezug auf den Rahmen (3) radial in Bezug auf die Oszillationsachse (A) verschieben kann.

8. Vorrichtung nach Anspruch 1, wobei die erste Verbindung (28) einen Stift (27) umfasst, der die Oszillationsachse (A) definiert; und einen Träger (30) des Stifts (27), der dafür ausgelegt ist den Stift (27) radial in Bezug auf die Oszillationsachse (A) zu bewegen, während der Stift (27) um die Oszillationsachse (A) dreht.

9. Vorrichtung nach Anspruch 8, wobei die Schlagelemente (4) an dem Rahmen (3) durch jeweilige exzentrische Stifte (27) angelenkt sind, die jeweilige erste Verbindungen (28) definieren; und wobei die erste Verbindung (28) einen exzentrischen Stift (27) und eine zylindrische Hülse (29), die den Träger (30) des Stifts (27) definiert, umfasst; wobei der Stift (27) und die Hülse (29) miteinander verbunden sind und sich entlang jeweiliger Mittenachsen (A, B) parallel zueinander und radial voneinander beabstandet erstrecken; wobei der Stift (27) und die Hülse (29) jeweils drehbar innerhalb jeweiliger Drehsitze (31, 32), die auf dem Rahmen (3) und auf einem Schlagelement (4) gebildet sind, drehbar sind.

10. Vorrichtung nach Anspruch 9, wobei jedes Schlagelement (4) in Bezug auf den Rahmen (3) mittels der jeweiligen Verbindung (28) um zwei Drehachsen dreht, wobei die Drehachsen zueinander parallel sind, und von den Mittenachsen (A, B) des Stifts (27) und der Hülse (29) gebildet werden.

11. Vorrichtung nach Anspruch 9 oder 10, wobei die Mittenachsen (A, B) des Stifts (27) und der Hülse (29) zu der Gleitachse (S) des Schafts (9) senkrecht stehen.

12. Vorrichtung nach Anspruch 8, wobei der Stift (27) axial entlang der Oszillationsachse (A) vorragt und in einen geschlitzten Gleitsitz (33) eingreift, der den Träger (30) definiert, und der wie ein länglicher Schlitz geformt ist, der sich radial in Bezug auf die Oszillationsachse (A) erstreckt.

13. Vorrichtung nach einem der Ansprüche 7 bis 12, wobei das Bewegungssystem (5) einen Schubkurbel-Mechanismus (17) zum Bewegen des Schafts (9) entlang der Gleitachse (S) in einer abwechselnden Verschiebungsbewegung umfasst.

14. Vorrichtung nach Anspruch 13, wobei der Schubkurbel-Mechanismus (17) ein Zahnrad (8) umfasst, das als ein Kurbelelement wirkt, und eine Stange (11), die exzentrisch auf das Zahnrad (8) montiert ist.

15. Vorrichtung nach Anspruch 14, wobei sich die Stange (11) zwischen entgegengesetzten Längsenden (13,14) erstreckt, die jeweils an das Zahnrad (8) und an den Schaft (9) angelenkt sind.

16. Vorrichtung nach einem der vorstehenden Ansprüche, wobei die Schlagelemente (4) jeweilige Antriebselemente (24) aufweisen, die an den Schaft (9) angelenkt sind, und jeweilige freie Enden (25), die den Antriebsenden (24) entgegengesetzt sind; und wobei jede erste Verbindung (28) auf einem Schlagelement (4) in einer Zwischenposition zwischen dem Antriebsende (24) und dem freien Ende (25) eingerichtet ist.

17. Vorrichtung nach einem der vorstehenden Ansprüche, wobei jedes Schlagelement (4) einen Arm (22) und eine Vielzahl von Querzinken (23) umfasst, die aus dem Arm (22) vorragen und längs entlang des Arms (22) beabstandet sind.

## Revendications

1. Dispositif de gaulage portable (1) pour cueillir des fruits sur des arbres, en particulier pour cueillir des olives, comprenant: un châssis de support (3); une paire d'éléments de gaulage oscillants (4) supportés par le châssis (3) et articulés sur le châssis (3) au moyen de premières jointures respectives (28); et un système de déplacement (5) supporté par le châssis (3) et déplaçant les éléments de gaulage (4) au moyen d'un élément poussoir (39) ayant une première extrémité axiale (19) mobile le long d'un axe de coulissement (S) et couplé à des extrémités d'entraînement respectives (24) des éléments de gaulage au moyen de deuxièmes jointures respectives (38); le dispositif (1) étant **caractérisé en ce que** les éléments de gaulage (4) sont articulés les uns aux autres et à une extrémité axiale de l'élément poussoir (39) au moyen d'au moins une broche de fonctionnement (26) définissant un axe de jointure commun (H) des éléments de gaulage (4); et **en ce qu'**au moins un entre la première jointure (28) et la deuxième jointure (38) d'au moins un desdits éléments de gaulage (4) est une jointure composite, configurée pour permettre la rotation de l'élément de gaulage respectif (4) autour d'au moins un premier axe de rotation (A, B) et un déplacement transversal dudit premier axe de rotation (A, B) tandis que l'élément de gaulage (4) tourne autour dudit premier axe de rotation (A, B).

2. Dispositif selon la revendication 1, dans lequel ladite jointure composite (38) est configurée pour permettre la rotation de l'élément de gaulage respectif (4) autour d'un premier et d'un deuxième axe de rotation (A, B), qui sont parallèles et radialement espacés l'un de l'autre.

3. Dispositif selon la revendication 1 ou 2, dans lequel la jointure composite (38) comprend une broche (27; 26), qui permet la rotation de l'élément de gaulage respectif (4) autour d'un axe (A) de la broche (27 ; 26); et un support (30) de la broche (27; 26) configuré pour permettre un déplacement transversal de la broche (27; 26) pendant que l'élément de gaulage (4) tourne autour de l'axe (A) de la broche (27; 26) .

4. Dispositif selon l'une des revendications précédentes, dans lequel lesdites premières jointures (28), qui relient les éléments de gaulage respectifs (4) au châssis (3), sont disposées dans une position intermédiaire entre les extrémités d'entraînement respectives (24) et les extrémités libres respectives (25) des éléments de gaulage (4) et permettent uniquement la rotation / oscillation des éléments de gaulage respectifs (4) autour d'axes d'oscillation respectifs (X) fixés par rapport au châssis (3); et lesdites deuxièmes jointures (38), qui relient les éléments de gaulage respectifs (4) à l'élément poussoir (9; 11), sont des jointures composites qui permettent la rotation des éléments de gaulage respectifs (4) autour d'axes de rotation respectifs (A) et le déplacement transversal des axes de rotation respectifs (A).

5. Dispositif selon l'une des revendications précédentes, dans lequel les deuxièmes jointures (38) comprennent des broches excentriques respectives (26) qui sont excentriques par rapport aux supports respectifs (30) des broches (26) définis par des bagues cylindriques respectives (29); chaque broche (26) et la bague respective (29) étant reliées l'une à l'autre et s'étendant le long d'axes centraux respectifs (A, B) parallèles l'un à l'autre et radialement espacés l'un de l'autre.

6. Dispositif selon l'une des revendications précédentes, dans lequel l'élément poussoir (39) agissant sur les éléments de gaulage (4) est défini par une broche (11) d'un mécanisme bielle-manivelle (17).

7. Dispositif selon la revendication 1, dans lequel l'élément poussoir (39) est défini par une tige (9) coulissant le long de l'axe de coulissement (S) dans un guide (10) solidaire du châssis (3); et les éléments de gaulage (4) sont articulés l'un à l'autre et à ladite première extrémité axiale (18) de la tige (9) par au moins une broche de fonctionnement (26) définissant un axe d'articulation commun (H) des éléments de gaulage (4) ; et les éléments de gaulage (4) sont articulés au châssis (3) au moyen de premières jointures roto-translantes respectives (28) reliant chaque élément de gaulage (4) au châssis (3) de sorte que chaque élément de gaulage (4) puisse tourner par rapport au châssis (3) autour d'un axe d'oscillation (A) parallèle à l'axe d'articulation (H) et puisse également se translater par rapport au châssis (3), radialement par rapport à l'axe d'oscillation (A).

8. Dispositif selon la revendication 1, dans lequel chaque première jointure (28) comprend une broche (27) définissant l'axe d'oscillation (A) ; et un support (30) de la broche (27) configuré pour déplacer la broche (27) radialement par rapport à l'axe d'oscillation (A) tandis que la broche (27) tourne autour de l'axe d'oscillation (A).

9. Dispositif selon la revendication 8, dans lequel les éléments de gaulage (4) sont articulés au châssis (3) par des broches excentriques respectives (27) définissant des premières jointures respectives (28); et dans lequel chaque première jointure (28) comprend une broche excentrique (27) et une bague cylindrique (29) définissant le support (30) de la broche (27); la broche (27) et la bague (29) étant jointes l'une à l'autre et s'étendant le long d'axes centraux respectifs (A, B) parallèles l'un à l'autre et radialement espacés l'un de l'autre; la broche (27) et la bague (29) pouvant tourner à l'intérieur des sièges de rotation respectifs (31, 32) formés sur le châssis (3) et sur un élément de gaulage (4), respectivement.

10. Dispositif selon la revendication 9, dans lequel chaque élément de gaulage (4) tourne par rapport au châssis (3) au moyen de jointure respective (28) autour de deux axes de rotation parallèles l'un à l'autre, définis par les axes centraux (A, B) de la broche (27) et de la bague (29), respectivement.

11. Dispositif selon la revendication 9 ou 10, dans lequel les axes centraux (A, B) de la broche (27) et de la bague (29) sont perpendiculaires à l'axe de coulissement (S) de la tige (9) .

12. Dispositif selon la revendication 8, dans lequel la broche (27) fait saillie axialement le long de l'axe d'oscillation (A) et vient en prise avec un siège coulissant fendu (33), définissant le support (30) et étant en forme de fente allongée s'étendant radialement par rapport à l'axe d'oscillation (A).

13. Dispositif selon l'une des revendications 7 à 12, dans lequel le système de déplacement (5) comprend un mécanisme bielle-manivelle (17) pour déplacer la tige (9) le long de l'axe de coulissement (S) dans un mouvement de translation alternatif.

14. Dispositif selon la revendication 13, dans lequel le mécanisme de bielle-manivelle (17) comprend un engrenage denté (8), faisant office d'élément de manivelle, et une tringle (11), montée excentriquement sur l'engrenage denté (8).

15. Dispositif selon la revendication 14, dans lequel la tringle (11) s'étend entre des extrémités longitudinales opposées (13, 14,) qui sont articulées respectivement à l'engrenage denté (8) et à la tige (9).

16. Dispositif selon l'une des revendications précédentes, dans lequel les éléments de gaulage (4) ont des extrémités d'entraînement respectives (24), articulées à la tige (9), et des extrémités libres respectives (25), opposées aux extrémités d'entraînement (24) ; et chaque première jointure (28) est agencée sur un élément de gaulage (4) dans une position intermédiaire entre l'extrémité d'entraînement (24) et l'extrémité libre (25).

17. Dispositif selon l'une des revendications précédentes, dans lequel chaque élément de gaulage (4) comprend un bras (22) et une pluralité de branches transversales (23), qui font saillie du bras (22) et sont espacées longitudinalement le long du bras (22) .
